# EUROPÄISCHE PATENTSCHRIFT

(11) **EP 2 746 644 B1**
(45) Veröffentlichungstag und Bekanntmachung des Hinweises auf die Patenterteilung: **04.07.2018**
(21) Anmeldenummer: 13193231.1
(22) Anmeldetag: 18.11.2013
(51) Int. Cl.: F21S 41/663, F21S 41/143, F21S 41/275, F21S 41/33, G02B 19/00

(54) **Kraftfahrzeugscheinwerfer mit einem blendungsfreien Fernlicht**
Motor vehicle headlamp with a dazzle-free main beam
Feu de véhicule automobile doté d'un phare de route anti-éblouissement

(30) Priorität: 18.12.2012 DE 102012223658
(43) Veröffentlichungstag der Anmeldung: 25.06.2014
(73) Patentinhaber: Automotive Lighting Reutlingen GmbH, 72762 Reutlingen (DE)
(72) Erfinder: Brendle, Matthias, 72074 Tübingen (DE)
(74) Vertreter: DREISS Patentanwälte PartG mbB

(56) Entgegenhaltungen:
- EP-A1- 2 237 080
- EP-A2- 2 620 695
- DE-A1-102007 014 676
- DE-A1-102008 039 092
- US-A1- 2008 247 188
- US-A1- 2009 290 371

## Beschreibung

Die vorliegende Erfindung betrifft einen Kraftfahrzeugscheinwerfer nach dem Oberbegriff des Anspruchs 1.

Ein solcher Scheinwerfer ist aus der EP 2 237 080 A1 bekannt und weist wenigsten ein Lichtmodul auf, das dazu eingerichtet ist, eine primäre Lichtverteilung im Inneren des Scheinwerfers zu erzeugen und durch wenigstens ein optisches Element in eine außerhalb des Scheinwerfers liegende sekundäre Fernlichtverteilung zu überführen. Dabei besteht die primäre Lichtverteilung aus mehreren Einzellichtverteilungen, von denen jede von einer individuellen Lichtquelle erzeugt wird. Das optische Element besitzt eine Grundform, durch die es dazu eingerichtet ist, jeweils eine Einzellichtverteilung der primären Lichtverteilung in einen ersten Teilbereich der sekundären Lichtverteilung zu überführen.

Dabei besteht die primäre Lichtverteilung aus mehreren Einzellichtverteilungen, von denen jede von einer jeweils zugeordneten Lichtquelle erzeugt wird.

Eine Helligkeit von wenigstens einer der Lichtquellen ist veränderbar, ohne die Helligkeit einer anderen der Lichtquellen zu verändern. Die primäre Lichtverteilung wird so in die sekundäre Lichtverteilung überführt, dass sich bei unterschiedlich hellen Lichtquellen Hell-Dunkel-Grenzen zwischen ersten Teilbereichen der sekundären Lichtverteilung ergeben, welche ersten Teilbereiche sich durch die Überführung der Einzellichtverteilungen der primären Lichtverteilung in die sekundäre Lichtverteilung ergeben.

Mit anderen Worten: Durch gesteuertes Verändern der Helligkeit einzelner Lichtquellen lässt sich die Helligkeit, mit der Teilbereiche der Fernlichtverteilung auf der Straße beleuchtet werden, gezielt beeinflussen. Durch Abdunkeln eines Teilbereichs, in dem sich andere Verkehrsteilnehmer befinden, kann eine Blendung dieser Verkehrsteilnehmer vermieden werden.

Es gibt mehrere Ansätze, ein blendungsfreies Fernlicht mithilfe spezieller Projektionssysteme ohne Verstellmotoren darzustellen. In der Regel wird eine primäre Lichtverteilung, die aus mehreren unmittelbar aneinandergereihten Einzellichtverteilungen besteht, innerhalb des Scheinwerfers erzeugt und über eine Projektionsoptik auf die Straße abgebildet. Die primäre Lichtverteilung kann dabei sowohl durch die Lichtquelle selbst gebildet werden, indem zum Beispiel Lichtaustrittsflächen von mehreren unmittelbar aneinandergereihten LED-Chips (Leuchtdioden) die primäre Lichtverteilung bilden.

Jede Lichtaustrittsfläche stellt dann eine Einzellichtverteilung dar. Alternativ kann die primäre Lichtverteilung auch über ein Feld (Array) aus Primäroptiken gebildet werden, wobei üblicherweise jede einzelne Optik des Optikarrays von einer LED beleuchtet wird. Damit wird jeweils eine Einzellichtverteilung auf der Lichtaustrittsfläche der Primäroptik oder in einem Brennpunkt dieser Optik als sogenanntes Zwischenbild erzeugt. Die aus der Summe der Einzellichtverteilungen resultierende primäre Lichtverteilung wird dann über eine abbildende Sekundäroptik auf die Straße projiziert.

Es ist relativ einfach, eine primäre Lichtverteilung als Summe von Einzellichtverteilungen zu erzeugen und diese Einzellichtverteilungen durch Reflektoren, Lichtleiter oder Linsen räumlich scharf gegeneinander abzugrenzen. Durch eine optische Abbildung dieser scharf berandeten Einzellichtverteilungen lassen sich wiederum kontrastreiche, scharf abgegrenzte Lichtfelder auf der Straße erzeugen.

Der Nachteil von scharf begrenzten Einzellichtverteilungen zeigt sich, wenn einzelne Lichtverteilungen gedimmt werden sollen, um beispielsweise einen sanften Übergang von zentralen, hellen Bereichen auf der Fahrbahn zu dunklen Bereichen am Fahrbahnrand zu realisieren und eine Eigenblendung durch Verkehrsschilder oder durch andere reflektierende Objekte am Fahrbahnrand zu unterbinden: An den Begrenzungen der scharfen Bilder der Einzellichtverteilungen in der resultierenden sekundären Lichtverteilung zeigen sich starke Beleuchtungsstärkesprünge, also stufenförmig abrupte Helligkeitsänderungen, die vom Betrachter als störende Inhomogenitäten wahrgenommen werden.

Wird eine Lichtverteilung gedimmt, die aus mehreren scharf berandeten, vertikal orientierten Streifenlichtverteilungen zusammengesetzt ist, sieht der Betrachter die Stufen im horizontalen Beleuchtungsstärkeverlauf als Abfolge heller und dunkler Streifen.

Diese Inhomogenitäten in der Lichtverteilung irritieren den Fahrer und senken den Komfort der Fernlichtfunktion beträchtlich.

Vor diesem Hintergrund besteht die Aufgabe der Erfindung in der Angabe eines Scheinwerfers der eingangs genannten Art, bei dem Beleuchtungsstärken, respektive Helligkeiten von einander benachbarten benachbarten Teilbereichen der sekundären Lichtverteilung, welche Helligkeiten sich als Folge unterschiedlich gedimmter und damit unterschiedlich heller Lichtquellen ergeben, nicht etwa stufenförmig, sondern mit einer möglichst gleichmäßigen Änderungsrate ineinander übergehen, so dass die genannten Irritationen vermieden werden.

Darüber hinaus sollen die Beleuchtungsstärkegradienten im Übergangsbereich zwischen zwei unterschiedlich hellen Teilbereichen der sekundären Lichtverteilung so hoch sein, dass das erforderliche Dunkelfeld für ein blendungsfreies Fernlicht möglichst klein gehalten werden kann.

Diese Aufgabe wird mit den Merkmalen des Anspruchs 1 gelöst. Damit unterscheidet sich ein erfindungsgemäßer Scheinwerfer von dem eingangs genannten Stand der Technik dadurch, dass das optische Element eine Grundform hat, die dem optischen Element abbildende Eigenschaften verleiht und dass der Grundform eine erste wellenförmige Deformation der optischen Fläche überlagert ist, die mindestens eine konkave und eine konvexe Halbwelle umfasst.

Durch diese Merkmale wird an Stelle eines scharf begrenzten ersten Teilbereichs ein erster Teilbereich erzeugt, der sich als Überlagerung einer Mehrzahl gegeneinander verschobener zweiter Teilbereiche ergibt. Für die folgende Erläuterung wird ein heller erster Teilbereich betrachtet, der von dunklen ersten Teilbereichen umgeben ist. Es gibt dann keine Einflüsse von Lichtquellen benachbarter erster Teilbereiche.

Jeder zweite Teilbereich erhält dann einen Bruchteil des Lichtstroms der Lichtquelle, die den hellen ersten Teilbereich insgesamt beleuchtet. Im Zentrum des aus der Überlagerung der zweiten Teilbereiche resultierenden ersten Teilbereichs überlagern sich viele zweite Teilbereiche, während sich an den Rändern des ersten Teilbereichs nur wenige zweite Teilbereiche überlagern. Als Folge ergibt sich eine vom Zentrum zu den Rändern gleichmäßig abnehmende Beleuchtungsstärke, wobei die Gleichmäßigkeit umso stärker ausgeprägt ist, umso mehr zweite Teilbereiche überlagert werden und umso äquidistanter die Abstände benachbarter zweiter Teilbereiche voneinander sind.

Das Ergebnis der Überlagerung der zweiten Teilbereiche ist damit insbesondere kein scharf begrenztes Bild einer Einzellichtverteilung aus der primären Lichtverteilung. Aus diesem Grund wird in dieser Anmeldung an Stelle des Begriff des Bildes, der scharfe Ränder impliziert, auch der passendere Begriff des ersten Teilbereichs der sekundären Lichtverteilung verwendet. Man könnte auch sagen, dass der erste Teilbereich im Rahmen der vorliegenden Erfindung ein verwischtes Bild einer Einzellichtverteilung ist, bei dem die Schärfe gezielt und in einer ganz bestimmten Art und Weise, die im Folgenden noch erläutert wird, reduziert wurde.

Es ist bevorzugt, dass das optische Element dazu eingerichtet ist, einander benachbarte Einzellichtverteilungen der primären Lichtverteilung in einander überlappende erste Teilbereiche der sekundären Lichtverteilung zu überführen.

Bevorzugt ist auch, dass die Einzellichtverteilungen der primären Lichtverteilung unmittelbar benachbart aneinander gereiht angeordnet sind.

Ferner ist bevorzugt, dass mindestens zwei Lichtverteilungen gleiche Breite aufweisen.

Bevorzugt ist auch, dass die zweiten Teilbereiche so verschoben sind, dass beiderseits eines Zentrums einer Überlagerung der zweiten Teilbereiche ein Unschärferand entsteht, in dem die Helligkeit linear auf null abfällt. Bevorzugt ist auch, dass die wellenförmige Deformation eine zum Teil zylindrische Form besitzt, deren Zylinderachse parallel zur Hell-Dunkel-Grenze der Lichtverteilung ausgerichtet ist.

Ferner ist bevorzugt, dass die wellenförmige Deformation ein Bestandteil der letzten optischen Fläche des optischen Elements in einem die primäre Lichtverteilung in die sekundäre Lichtverteilung überführenden Strahlengang ist.

Bevorzugt ist auch, dass das optische Element eine Grundform hat, die dem optischen Element abbildende Eigenschaften verleiht und dass der Grundform eine zweite wellenförmige Deformation überlagert ist, die eine zum Teil zylindrische Form besitzt, deren Zylinderachse quer zur Hell-Dunkel-Grenze der Lichtverteilung ausgerichtet ist.

Ferner ist bevorzugt, dass das optische Element mehrere jeweils das gleiche Licht formende optische Flächen aufweist und dass die parallel zur Hell-Dunkel-Grenze der Lichtverteilung liegende Abweichung und die quer zur Hell-Dunkel-Grenze der Lichtverteilung liegende Abweichung von der Grundform auf verschiedenen der optischen Flächen verwirklicht ist.

Bevorzugt ist auch, dass das wenigstens eine optische Element die Grundform eines Parabelreflektors besitzt und insbesondere ein facettiertes Rotationsparaboloid ist, oder einen Hyperboloid-Reflektor und eine Sammellinse, oder einen Ellipsoidreflektor und eine Zerstreuungslinse, oder nur eine Sammellinse aufweist, oder eine farbkorrigierte Baugruppe aus wenigstens einer Sammellinse mit kleiner Farbdispersion und einer Zerstreuungslinse mit großer Farbdispersion aufweist.

Ferner ist bevorzugt, dass Lichtquellen benachbarter Lichtquellen dazu eingerichtet sind, in gesteuerter Weise mit gleicher oder von Lichtquelle zu Lichtquelle oder von Gruppe zu Gruppe verschiedener Helligkeit betrieben zu werden.

Bevorzugt ist auch, dass der Scheinwerfer genau ein Lichtmodul mit den in einem der vorhergehenden Ansprüchen genannten Merkmalen aufweist und dass sich jeder erste Teilbereich von der Mitte eines unmittelbar benachbarten ersten Teilbereichs bis zur Mitte des auf der gegenüberliegenden unmittelbar benachbarten ersten Teilbereichs erstreckt.

Ferner ist bevorzugt, dass zwei einander benachbarte zweite Teilbereiche, die aus derselben Einzellichtverteilung resultieren, um ± T/2 senkrecht zu den Hell-Dunkel-Grenzen der Lichtverteilungen gegeneinander horizontal verschoben angeordnet sind, wobei T der Abstand von der Mitte eines ersten Teilbereichs zur Mitte des benachbarten ersten Teilbereichs ist.

Bevorzugt ist auch, dass der Scheinwerfer n Module mit den in einem der vorhergehenden Ansprüchen genannten Merkmalen aufweist, wobei die Module im Scheinwerfer so angeordnet sind, dass sich ihre sekundären Lichtverteilungen zu einer Gesamtlichtverteilung überlagern, und wobei jeweils zwei Lichtmodule so angeordnet sind, dass ihre sekundären Lichtverteilungen um T/n gegeneinander verschoben liegen, wobei T der Abstand von zwei benachbarten zweiten Teilbereichen in jeder der beiden sekundären Lichtverteilungen ist.

Weitere Vorteile ergeben sich aus den abhängigen Ansprüchen, der Beschreibung und den beigefügten Figuren.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei zeigen jeweils in schematischer Form:
Figur 1 eine Draufsicht auf einen Frontscheinwerfer zusammen mit einem Messschirm;
Figur 2 ein optisches System eines bekannten Fernlichtmoduls;
Figur 3 ein erstes Ausführungsbeispiel einer Vorrichtung zur Erzeugung einer primären Lichtverteilung;
Figur 4 ein zweites Ausführungsbeispiel einer Vorrichtung zur Erzeugung einer primären Lichtverteilung;
Figur 5 eine sekundäre Lichtverteilung und einen zugehörigen Verlauf einer Beleuchtungsstärke;
Figur 6 ein bekanntes Lichtmodul, mit dem die in Figur 5 dargestellten Muster erzeugt werden;
Figur 7 ein Ausführungsbeispiel eines Merkmale der Erfindung aufweisenden Lichtmoduls;
Figur 8 ein Beispiel einer sekundären Lichtverteilung, wie sie mit einem Ausführungsbeispiel der Erfindung erzielbar ist;
Figur 9 eine sekundäre Lichtverteilung für ein Lichtmodul eines erfindungsgemäßen Scheinwerfers,
Figur 10 eine sekundäre Lichtverteilung die aus mehreren Modulen erzeugt wird;
Figur 11 die sich insgesamt ergebenden sekundären Lichtverteilungen beim Stand der Technik und bei zwei Ausführungsbeispielen der vorliegenden Erfindung im Vergleich;
Figur 12 ein zum Gegenstand der Figur 6 analoges bekanntes Lichtmodul; und
Figur 13 ein zum Gegenstand der Figur 7 analoges Ausführungsbeispiel eines Merkmale der Erfindung aufweisenden Lichtmoduls.

Dabei bezeichnen gleiche Bezugszeichen in verschiedenen Figuren jeweils gleiche oder zumindest ihrer Funktion nach gleiche Elemente.

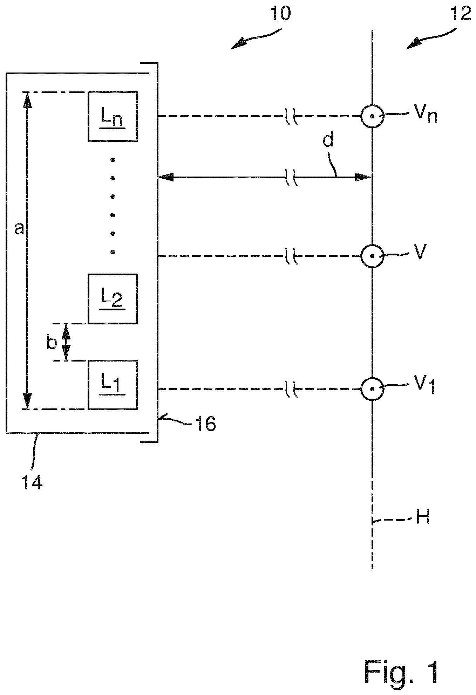

Im Einzelnen zeigt die Figur 1 eine Draufsicht auf einen Frontscheinwerfer 10, zusammen mit einem Messschirm 12, auf dem eine sekundäre Lichtverteilung von dem Scheinwerfer erzeugt wird. Der Messschirm erstreckt sich längs einer horizontalen Richtung H und einer vertikalen Richtung V, die senkrecht aus der Zeichnungsebene herausragt. Bei einer bestimmungsgemäßen Verwendung des Scheinwerfers in einem Kraftfahrzeug entspricht die Anordnung des Messschirms daher der Anordnung einer aus der Fahrbahn vor dem Fahrzeug senkrecht aufragenden Wand.

Der Scheinwerfer ist in der Figur 1 in einer Orientierung dargestellt, die dieser bestimmungsgemäßen Verwendung entspricht. Er ist aufgeschnitten dargestellt, wobei die Schnittebene eine horizontal ausgerichtete Ebene ist. Der Scheinwerfer besitzt n einzelne Lichtmodule L1, L2, ..., Ln, die hier nebeneinander angeordnet sind, was aber nicht zwingend ist. Die einzelnen Lichtmodule könnten z.B. auch übereinander angeordnet sein. Diese n Lichtmodule dienen zur Erzeugung von Fernlicht-Lichtverteilungen. Die Zahl n der für diesen Zweck vorgesehenen Lichtmodule kann auch gleich Eins sein. Bevorzugt liegt sie zwischen Eins und Zehn. Über diese n für das Fernlicht vorgesehenen Lichtmodule hinaus kann der Scheinwerfer noch weitere Lichtmodule aufweisen, mit denen andere Lichtverteilungen erzeugt werden, seien es Scheinwerfer-Lichtverteilungen wie Abblendlicht- oder Nebellicht-Lichtverteilungen, oder auch Signal-Lichtverteilungen wie Blinklicht- und/oder Tagfahrlicht-Lichtverteilungen, ohne dass diese Aufzählung als abschließend verstanden werden soll. Sämtliche Lichtmodule sind in einem Gehäuse 14 des Scheinwerfers angeordnet, dessen Lichtaustrittsöffnung durch eine transparente Abdeckscheibe 16 verschlossen wird.

Die zur Erzeugung von Fernlicht-Lichtverteilungen dienenden Lichtmodule L1,..., Ln sind in dem dargestellten Beispiel über eine Breite a innerhalb des Scheinwerfers angeordnet. Ihr Abstand b voneinander wird im realen Scheinwerfer maximal wenige Zentimeter betragen. Es wird weiter davon ausgegangen, dass ihr Abstand b und auch die Breite a klein ist gegenüber dem Abstand d von dem Scheinwerfer, in dem die sekundäre Lichtverteilung auf der Straße bzw. auf dem Messschirm erzeugt wird. Man kann daher in erster Näherung die Vertikale V1 zur Hauptabstrahlrichtung des Lichtmoduls L1 und die Vertikale Vn zur Hauptabstrahlrichtung des Lichtmoduls Ln durch eine in Verlängerung der ScheinwerferMitte liegende Vertikale V ersetzen. Jede Vertikale kreuzt die Hauptabstrahlrichtung des zugehörigen Lichtmoduls.

Die Hauptabstrahlrichtungen treffen sich in einer Ausgestaltung in einem weit vor dem Fahrzeug liegenden Punkt. Die Lichtmodule sind so angeordnet und ausgerichtet, dass sie zusammen eine regelkonforme Fernlicht-Lichtverteilung erzeugen. Der Kreuzungspunkt der in der Verlängerung der Scheinwerfermitte vor dem Scheinwerfer stehenden Vertikalen V mit der Horizontalen H bildet den Ursprung eines Koordinatensystems, dessen einzelne Punkte Wertepaare eines vertikalen Winkels und eines horizontalen Winkels sind.

Wenn im Folgenden Abstände zwischen Lichtverteilungen genannt werden, so ist dies immer als Differenz von zwei solchen Wertepaaren zu sehen, wobei hier primär der Abstand in Richtung der Horizontalen H von Interesse ist.

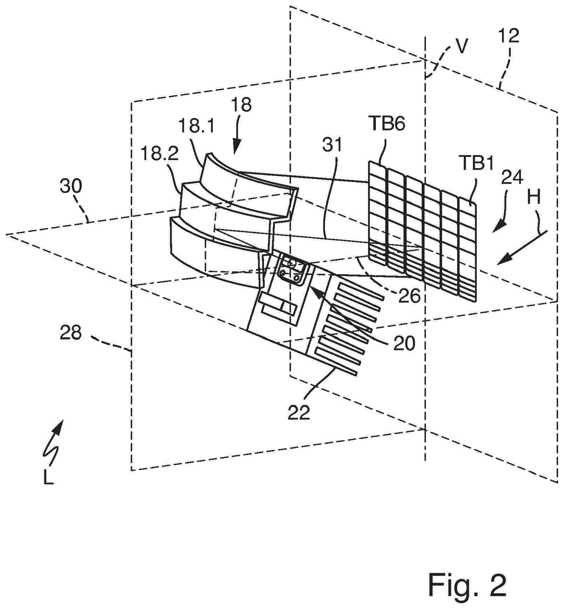

Figur 2 zeigt ein optisches System eines bekannten Fernlichtmoduls L zusammen mit verschiedenen Ebenen. Das optische System besteht hier aus einem facettierten Reflektor 18 als Projektionsoptik, bei dem Grenzen zwischen seinen einzelnen Facetten 18.1, 18.2, und gegebenenfalls weiteren Facetten horizontal verlaufen, und einem Ersatzlichtquellenfeld 20.

Das Ersatzlichtquellenfeld besteht aus mehreren Leuchtdioden, die in Horizontalrichtung nebeneinander auf einem Kühlkörper 22 angeordnet sind, und einer Anordnung von Sammellinsen, die das Licht der Leuchtdioden sammeln und bündeln. Die Projektionsoptik fokussiert auf die Lichtaustrittsfläche des Optikarrays, d.h. auf die Linsen und nicht auf die Lichtaustrittsflächen der Chips.

Der Reflektor 18 stellt eine Ausgestaltung einer Projektionsoptik dar, die auf die Lichtaustrittsfläche der Sammellinsen fokussiert ist. Auf dieser Lichtaustrittsfläche erzeugt eine eingeschaltete Leuchtdiode eine Einzellichtverteilung, wobei die von verschiedenen Leuchtdioden erzeugten Einzellichtverteilungen keine Überlappung aufweisen. Die Summe der Einzellichtverteilungen stellt eine primäre Lichtverteilung dar. Diese primäre Lichtverteilung wird von dem Reflektor in eine sekundäre Lichtverteilung 24 überführt, die sich in der dargestellten Ausgestaltung auf einem Messschirm 12 einstellt. Die sekundäre Lichtverteilung besitzt hier sechs horizontal nebeneinander liegende erste Teilbereiche TB1,...,TB6 von denen jeder aus einer Einzellichtverteilung der primären Lichtverteilung entsteht.

Eine optische Achse 26 des Lichtmoduls ergibt sich als Schnittlinie einer vertikal angeordneten Meridionalebene 28 und einer horizontal angeordneten Sagittalebene 30. Die optische Achse steht senkrecht auf dem Schirm und durchstößt diesen im Punkt (H=0, V=0). Die Begriffe horizontal und vertikal beziehen sich hier, wie auch in der ganzen vorliegenden Anmeldung, immer auf die im Zusammenhang mit der Figur 1 beschriebene bestimmungsgemäße Verwendung eines Scheinwerfers in einem Kraftfahrzeug. Die einzelnen ersten Teilbereiche der sekundären Lichtverteilung sind in horizontaler Richtung H nebeneinander angeordnet und überlappen sich nicht. Wenn man eine Lichtquelle ausschaltet und die benachbarten Lichtquellen eingeschaltet sind, entstehen daher die eingangs beschriebenen und unerwünschten stufenförmigen Helligkeitssprünge.

Die innerhalb eines Teilbereichs der sekundären Lichtverteilung liegenden und im Wesentlichen horizontal verlaufenden Linien sind Linien gleicher Helligkeit (Isolux-Linien), wobei die Helligkeit von einer maximalen, hier in Höhe des Horizonts herrschenden Helligkeit nach oben und unten abnimmt. Die sich weit nach oben über den Horizont erstreckende Ausleuchtung der ersten Teilbereiche zeigt, dass es sich um eine Fernlicht-Lichtverteilung handelt. Eine Hauptabstrahlrichtung 31 liegt in der Meridionalebene und weist in das Zentrum der Lichtverteilung.

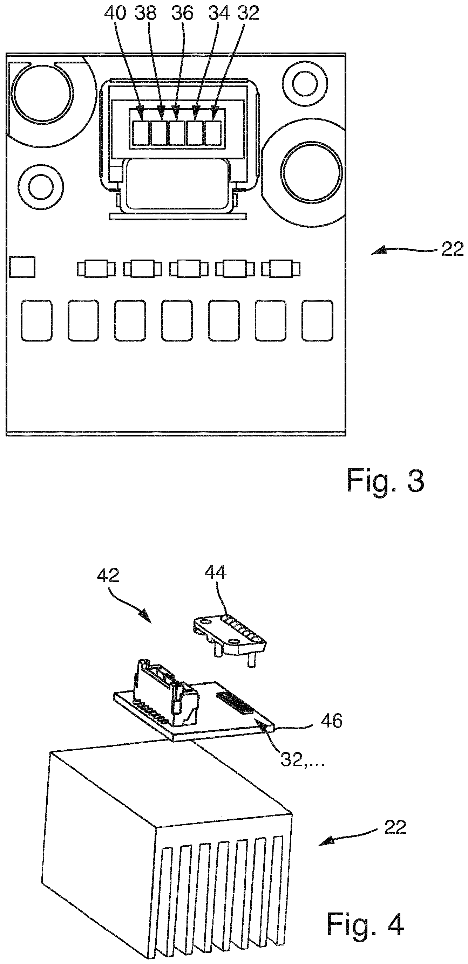

Figur 3 zeigt ein erstes Ausführungsbeispiel einer Vorrichtung zur Erzeugung einer primären Lichtverteilung in einer Blickrichtung, die der Hauptabstrahlrichtung der Vorrichtung entgegengesetzt gerichtet ist. Die Vorrichtung ist hier eine Baugruppe, die als wesentliche Elemente eine Gruppe von hier fünf Leuchtdioden aufweist, die auf einem Kühlkörper befestigt sind. Man sieht insbesondere die Lichtaustrittsflächen 32, 34, 36, 38, 40 von fünf quadratischen Leuchtdioden-Chips, die unmittelbar aneinander angrenzend in einer geraden Linie angeordnet sind. Die primäre Lichtverteilung ist in diesem Fall die Lichtverteilung, die sich auf der Summe der Lichtaustrittsflächen einstellt. Jede Lichtaustrittsfläche gehört bevorzugt zu einer individuell steuerbaren Leuchtdiode oder zu einer gemeinsam steuerbaren Gruppe von Leuchtdioden. Die Helligkeit ist individuell steuerbar, zum Beispiel durch Verwendung unterschiedlicher Tastverhältnisse, mit denen die LEDs eingeschaltet und ausgeschaltet werden. Dies geschieht so schnell (z.B. mit 200 Hz), dass der menschliche Sehsinn nur eine mittlere Helligkeit wahrnimmt.

Die Lichtaustrittsfläche einer einzelnen Leuchtdiode ist bevorzugt zwischen 0,3 mm und 2 mm lang. Die Lichtaustrittsfläche kann auch rechteckig sein. Die Chips sind in thermischem Kontakt auf dem Kühlkörper befestigt, der im übrigen noch mechanische Strukturen zur Befestigung und elektrische Strukturen zur Steuerung und Energieversorgung trägt, die an sich alle bekannt sind und daher nicht erläuterungsbedürftig sind.

Figur 4 zeigt ein zweites Ausführungsbeispiel einer Vorrichtung zur Erzeugung einer primären Lichtverteilung. Dieses zweite Ausführungsbeispiel unterscheidet sich vom ersten Ausführungsbeispiel durch eine Primäroptik 42, die hier als Feld von Linsen 44 verwirklicht ist und die vor den Lichtaustrittsflächen der Leuchtdioden befestigt wird. Die Leuchtdioden sind auf einer Leiterplatte 46 angeordnet, die ihrerseits auf einen Kühlkörper 22 montiert wird. Die Anordnung aus Leiterplatte, Leuchtdioden und Vorsatzoptik wird hier auch als Ersatzlichtquelle bezeichnet. Auch hier sind die hier quadratischen Chips unmittelbar nebeneinander in einer geraden Linie angeordnet.

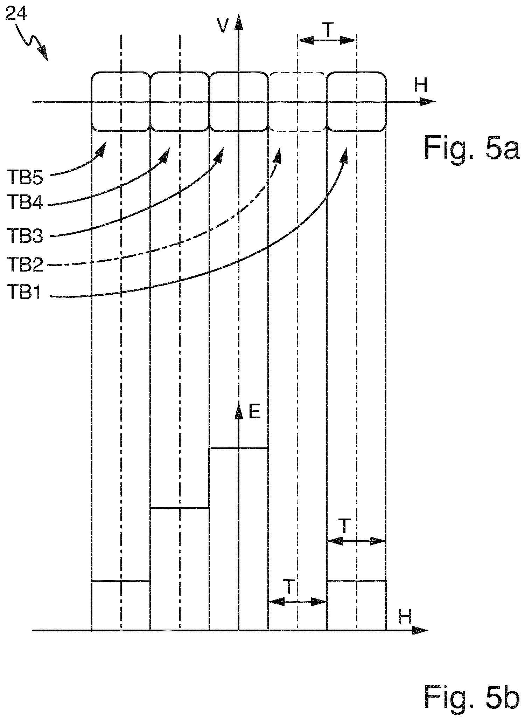

Figur 5a zeigt eine sekundäre Lichtverteilung 24, wie sie bei einem bekannten, fünf Einzellichtverteilungen bereitstellenden Fernlichtmodul einstellbar ist. Die sekundäre Lichtverteilung 24 ergibt sich als Summe scharf begrenzter Teilbereiche TB1 bis TB5, von denen jeder ein Bild einer Einzellichtverteilung ist und wobei sich die Bilder nicht überlappen. Eine Leuchtdiode soll hier ausgeschaltet sein, was in der Figur 5a durch den als punktierte Linie gezeichneten Umriss des zugehörigen Teilbereichs TB2 repräsentiert wird. Die Breite T entspricht hier sowohl der Winkelbreite des Bildes einer einzelnen Einzellichtverteilung in horizontaler Richtung als auch dem Abstand von Mittelpunkten der Bilder von zwei benachbarten Einzellichtverteilungen in horizontaler Richtung. Die Bilder überlappen sich daher hier nicht. Der Abstand T der bevorzugt gleich breiten Lichtverteilungen (gemessen von Mitte zu Mitte benachbarter Teilbereiche) wird im Folgenden auch als Teilung T bezeichnet.

Figur 5b zeigt einen möglichen, zugehörigen Verlauf einer Beleuchtungsstärke E längs der Horizontalen H für den Vertikalwinkel V = 0°. Die Beleuchtungsstärke E ist ein Maß für die Helligkeit. Je größer der Wert von E ist, desto größer ist auch die Helligkeit. Der Verlauf nach Figur 5b ergibt sich durch Dimmung der Leuchtdioden, die zugehörige Einzellichtverteilungen erzeugen. Im dargestellten Fall sind die seitlich angeordneten Lichtquellen gedimmt, um einen abrupten Übergang zu gänzlich unbeleuchteten Bereichen weiter links und rechts zu vermeiden. Darüber hinaus ist eine Leuchtdiode stark gedimmt oder sogar ausgeschaltet. Dies geschieht z.B. um andere Verkehrsteilnehmer nicht zu blenden, die sich in diesem Winkelbereich befinden, der punktiert gezeichnet ist.

Durch die rechteckförmigen Beleuchtungsstärkeprofile entstehen sehr starke Beleuchtungsstärkegradienten an den Grenzen zwischen Bildern benachbarter Einzellichtverteilungen TB1 und TB2, TB2 und TB3, und so weiter. Der resultierende streifenförmige Verlauf erscheint dem Fahrer als Abfolge von verschieden hellen und dunklen Streifen, was als störend wahrgenommen wird.

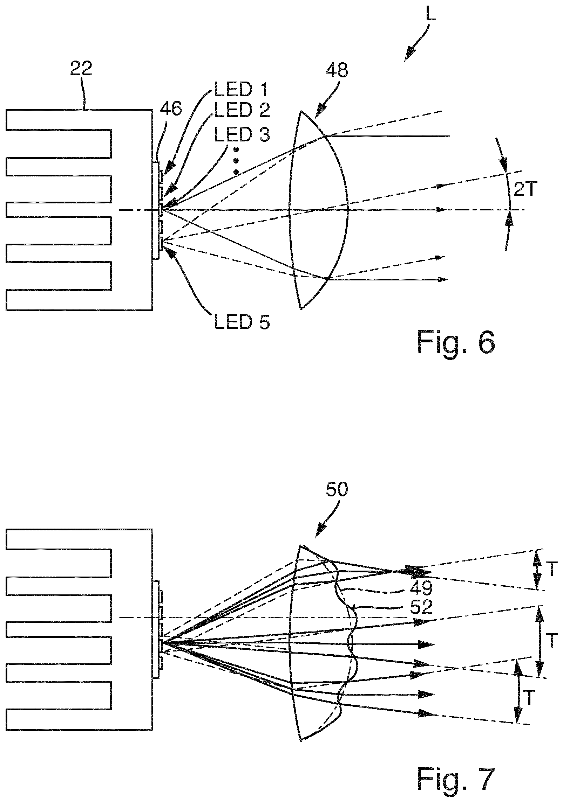

Figur 6 zeigt ein bekanntes Lichtmodul L, mit dem die in Figur 5 dargestellten Muster erzeugt werden, zusammen mit Strahlengängen für die Abbildung der Einzellichtverteilungen, die mit der dritten Leuchtdiode LED 3 und der fünften Leuchtdiode LED 5 erzeugt werden. Figur 6 zeigt das Lichtmodul in einem Horizontalschnitt. Dabei sind für zwei Einzellichtverteilungen, respektive Lichtquellen, jeweils ein zentraler Strahl und zwei Randstrahlen dargestellt. Ein optisches Element in Form einer Projektionslinse 48 bildet die Einzellichtverteilungen seitenverkehrt ab. Die Bilder der Punkte, von denen die dargestellten Strahlen ausgehen, liegen auf der Straße in horizontaler Richtung um die zweifache Winkelbreite T einer Einzellichtverteilung auseinander, also um zwei T. Hätte man den in Figur 6 unteren Randpunkt der Einzellichtverteilung der dritten Leuchtdiode und den oberen Randpunkt der Einzellichtverteilung der fünften Leuchtdiode betrachtet, hätte sich der Winkelabstand T ergeben, was der Winkelbreite T der Lücke in der Figur 5b entspricht. Die von einem Punkt der primären Lichtverteilung ausgehenden Strahlen sind im Bildraum parallel und werden so im Unendlichen wieder in einen Punkt überführt. Dies gilt zum Beispiel für die von einem zentralen Punkt der in der Mitte der primären Lichtverteilung liegenden LED 3 ausgehenden Strahlen, von denen zwei Randstrahlen und ein zentraler Strahl als durchgezogene Linien gezeichnet sind. Wenn man durch eine Blende nur schmale Teilbündel, beispielsweise nur jeweils einen der genannten Strahlen in die Projektionslinse eintreten lässt, so ändert sich dadurch nur die Helligkeit des Bildpunktes, nicht aber dessen Lage. Aus dieser Punkt-zu-Punkt-Abbildung ergibt sich die scharfe Berandung der Bilder der Einzellichtverteilungen beim Stand der Technik.

Figur 7 zeigt eine Überlagerung des Gegenstandes der Figur 6 mit einem Ausführungsbeispiel eines Merkmale der Erfindung aufweisenden Lichtmoduls. Auch hier ist das Lichtmodul in einem Horizontalschnitt dargestellt.

Figur 7 zeigt eine gestrichelt dargestellte Kontur einer Lichtaustrittsfläche einer Projektionslinse zusammen mit gestrichelt dargestellten Strahlengängen, die von verschiedenen Punkten der primären Lichtverteilung ausgehen. Die gestrichelte Kontur der Lichtaustrittsfläche entspricht der Kontur der Lichtaustrittsfläche der Projektionslinse 48 aus der Figur 6. Diese Kontur stellt eine Grundform 49 dar, die der Linse scharf abbildende Eigenschaften verleiht.

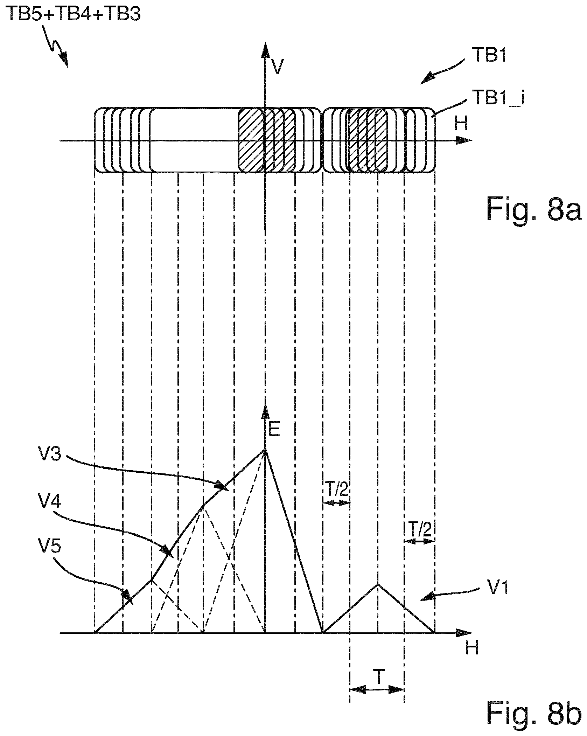

Mit anderen Worten: Das projizierende optische Element 50 besitzt eine Grundform 49, durch die es dazu eingerichtet ist, jeweils eine Einzellichtverteilung der primären Lichtverteilung in einen Teilbereich der sekundären Lichtverteilung zu überführen.
Dieser Grundform ist eine Modulation überlagert. Diese Modulation ist funktional so definiert, dass das optische Element wenigstens eine optische Fläche aufweist, welche die Grundform so moduliert, dass das optische Element eine Einzellichtverteilung der primären Lichtverteilung in eine Vielzahl von zweiten Teilbereichen der sekundären Lichtverteilung überführt, die gleich groß und mit gleicher Orientierung gegeneinander verschoben in der sekundären Lichtverteilung überlappend angeordnet sind und in ihrer Überlappung einen ersten Teilbereich bilden. Das Ergebnis ist in der Figur 8 dargestellt, die unter anderem einen ersten Teilbereich TB1 zeigt, der sich aus vielen zweiten Teilbereichen TB1_2 zusammensetzt.

In struktureller Hinsicht wird die Modulation bei der in der Figur 7 dargestellten Ausgestaltung durch eine erste wellenförmige Deformation der optischen Fläche erzeugt, die der Grundform überlagert ist und die mindestens eine konkave und eine konvexe Halbwelle umfasst. Fig. 7 zeigt eine Ausgestaltung mit vier konvexen und drei konkaven Halbwellen.

Die wellenförmige Deformation besitzt eine zum Teil zylindrische Form, deren Zylinderachse parallel zur Hell-Dunkel-Grenze der Lichtverteilung ausgerichtet ist. In der Figur 7 ist die Zylinderachse daher senkrecht zu der Zeichnungsebene ausgerichtet.

Figur 7 zeigt auch, dass die wellenförmige Deformation ein Bestandteil der letzten optischen Fläche des optischen Elements 50 in einem die primäre Lichtverteilung in die sekundäre Lichtverteilung überführenden Strahlengang ist.

In einer Ausgestaltung ist der Grundform eine zweite wellenförmige Deformation überlagert, die eine zum Teil zylindrische Form besitzt, deren Zylinderachse quer zur Hell-Dunkel-Grenze der Lichtverteilung ausgerichtet ist. Eine solche Zylinderachse würde in der Figur 7 parallel zur Zeichnungsebene liegen. Aus Gründen der Übersichtlichkeit ist sie nicht dargestellt.

Die in der Fig. 7 als durchgezogene Linien gezeichneten Strahlen stellen den realen Strahlengang dar, der durch die modulierte Form erzeugt wird, während die gestrichelten Linien den scheinbaren Ursprung der gestreuten Lichtstrahlen zeigen, wie er sich bei der unmodulierten Grundform einstellen würde.

Die unmodulierte Grundform führt zu den Punkt zu Punkt - Abbildungseigenschaften, wie sie in Bezug auf Figur 6 erläutert worden sind. Die gestrichelt dargestellte Grundform würde also die Lichtaustrittsfläche einer einzelnen LED scharf in eine Winkelbreite T in der sekundären Lichtverteilung auf dem Messschirm und damit auf der Straße abbilden.

Wie erwähnt, besitzt die Projektionslinse in Wirklichkeit aber nicht die gestrichelt dargestellte Kontur, sondern die als durchgezogene Linie dargestellte wellenförmige Kontur 52. Aus den durchgezogenen Strahlengängen in der Fig. 7 ergibt sich, dass der Mittelpunkt der zentralen Lichtquelle durch die mit der Modulation erzeugte Streuoptik im Bildraum auf eine der Teilung T entsprechende Winkelbreite auseinandergezogen wird. Das bedeutet, dass der betrachtete mittlere Punkt der Einzellichtverteilung nicht mehr als Punkt, sondern als Linie in der sekundären Lichtverteilung erscheint, die eine Winkelbreite von T besitzt. In der Figur 7 wird z.B. der zentrale Punkt der primären Lichtverteilung in eine Linie der horizontalen Breite +/-T/2, also insgesamt T in der sekundären Lichtverteilung überführt.

Die Darstellung der Strahlen ist so gewählt, dass die Wirkung der konvexen wie der konkaven Streuzonen gezeigt wird. Natürlich kann man die Optik auch nur mit konkaven oder nur mit konvexen Streuoptiken aufbauen.

Die von einem Punkt der primären Lichtverteilung ausgehenden Strahlen sind hier also im Bildraum nicht parallel und werden daher nicht wieder in einen Punkt überführt.

Wenn man durch eine Blende nur schmale Teilbündel, beispielsweise nur jeweils einen der von einem Punkt der primären Lichtverteilung in verschiedene Richtungen ausgehenden Strahlen in die Projektionslinse eintreten lässt, so ändert sich dadurch nicht nur die Helligkeit des Bildpunktes, sondern auch dessen Lage im Bildraum. Das bedeutet, dass der mit dem ausgeblendeten Teilbündel jeweils erzeugte Teilbereich anders als bei einer scharf abbildenden Optik seine Lage ändert, wenn sich die Position der Blende ändert. Das bedeutet weiter, dass viele solcher Teilbündel entsprechend viele (zweite) Teilbereiche mit einer jeweils etwas veränderten Lage erzeugen, die sich zu einem unscharf begrenzten (ersten) Teilbereich überlagern.

Figur 8 zeigt ein Beispiel einer sekundären Lichtverteilung zusammen mit einem horizontalen Verlauf, wie es mit einem Ausführungsbeispiel der Erfindung erzielbar ist.

Figur 8a zeigt eine sekundäre Lichtverteilung, wie sie mit einem fünf Einzellichtverteilungen bereitstellenden Lichtmodul erzeugt werden kann, das die Merkmale des Anspruchs 1 aufweist.

Figur 8b zeigt zugehörige Verläufe der Beleuchtungsstärke E längs der Horizontalen H, wobei die Lichtquellen genauso gedimmt sind, wie im Fall der Figur 5b. Wie weiter oben beschrieben worden ist, wird ein Punkt der primären Lichtverteilung von einem Lichtmodul eines erfindungsgemäßen Scheinwerfers nicht in einen Punkt, sondern in eine horizontale Linie überführt. Die Winkelbreite einer solchen Linie beträgt im dargestellten Beispiel die Hälfte des Abstands T von Mittelpunkten von zwei benachbarten ersten Teilbereichen der sekundären Lichtverteilung. Das bedeutet, dass die Linien, die sich als Bilder der Randpunkte ergeben, jeweils um T/2 über die Breite eines ersten Teilbereichs hinausragen, wie er sich bei der Figur 4b ergeben würde. Das bedeutet ferner, dass die Zahl der sich überlappenden Linien, die sich als Bilder von Punkten der zugehörigen Einzellichtverteilungen der primären Lichtverteilung ergibt, von außen nach innen zunimmt und in der Mitte maximal ist. Die Linien überlagern sich, wobei jede Linie einen kleinen Beitrag zur Beleuchtungsstärke liefert. In der Mitte ergibt sich damit eine maximale Beleuchtungsstärke, weil dort die Zahl der der sich überlagernden Linien maximal ist. Die Beleuchtungsstärke nimmt dann zu den Rändern hin linear ab, weil sich zu den Rändern hin immer weniger Linien überlagern und weil die Zahl der sich überlagernden Linien proportional zum Abstand vom äußersten Rand der am weitesten außen liegenden Linien ist.

Damit ergibt sich qualitativ ein dreiecksförmiger Verlauf V1 für die Beleuchtungsstärke innerhalb eines ersten Teilbereichs TB1 der sekundären Lichtverteilung, wie er in der Figur 5b für den ersten Teilbereich dargestellt ist, der von der fünften Leuchtdiode erzeugt wird. Figur 8a zeigt einen solchen Teilbereich TB1 der sekundären Lichtverteilung. Dieser erste Teilbereich TB1 ist demnach doppelt so breit wie der vergleichbare erste Teilbereich aus Figur 5a. Er geht durch die beschriebene Streuung um +/- T/2 aus dem in Figur 5a dargestellten Teilbereich TB1 hervor. Auf analoge Weise ergeben sich weitere dreiecksförmige Verläufe V3, V4, V5 der Beleuchtungsstärke längs der Horizontalen H für die ersten Teilbereiche der sekundären Lichtverteilung, die von den ersten drei Leuchtdioden erzeugt werden. Die Leuchtdioden sind dabei genauso gedimmt wie im Fall der Figur 5.

Die Maximalwerte der stufenförmig verlaufenden Beleuchtungsstärke der Figur 5 werden beim Gegenstand der Figur 8 nur im Scheitelpunkt der breiteren, dreiecksförmigen Beleuchtungsstärkeverteilungen der Figur 8 erreicht. Wie Figur 8 zeigt, überlagern sich die dreiecksförmigen Beleuchtungsstärkeprofile V5, V4, V3 der Figur 8 ohne nennenswerte Stufen zu einem weitgehend linearen und ebenfalls dreiecksförmigen Summenprofil. Das bedeutet, dass der Fahrer hier keine verschieden hellen und/oder dunklen Streifen sieht, sondern dass sich die Helligkeit zwischen lokalen Maxima und Minima gleichmäßig und linear ändert. Die lokalen Maxima sind in der Figur 8a schraffiert dargestellt. Dies ergibt also das gewünschte streifenfreie und damit homogene Erscheinungsbild mit einer weich auslaufenden Helligkeit an den äußeren Rändern und an den Rändern eines gedimmten Dunkelbereiches innerhalb der sekundären Lichtverteilung. Ein solcher gedimmter Dunkelbereich liegt hier zwischen dem Verlauf V3 und dem Verlauf V1.

Figur 8a zeigt damit insbesondere eine gegenüber der Lichtverteilung nach Figur 5 verbesserte Lichtverteilung, die sich ergibt, wenn die streuende Optik eine horizontale Streuung um ± T/2 bewirkt. Als erwünschte Folge ergeben sich gemäß der Figur 8b die linearen Beleuchtungsstärkeverläufe zu den Rändern der Lichtverteilungen hin. Das Beleuchtungsstärkemaximum der Teilbereiche aus der Figur 5 wird bei den dazu jeweils vergleichbaren Teilbereichen aus der Figur 8 jeweils nur im Scheitelpunkt der dreieckförmigen Beleuchtungsstärkeprofile erreicht. Benachbarte Teilbereiche überlappen sich zu jeweils 50%. Der Beleuchtungsstärkeverlauf gemäß Figur 8b ergibt sich für V = 0°; die Lichtverteilungen sind wie in Figur 5 gedimmt.

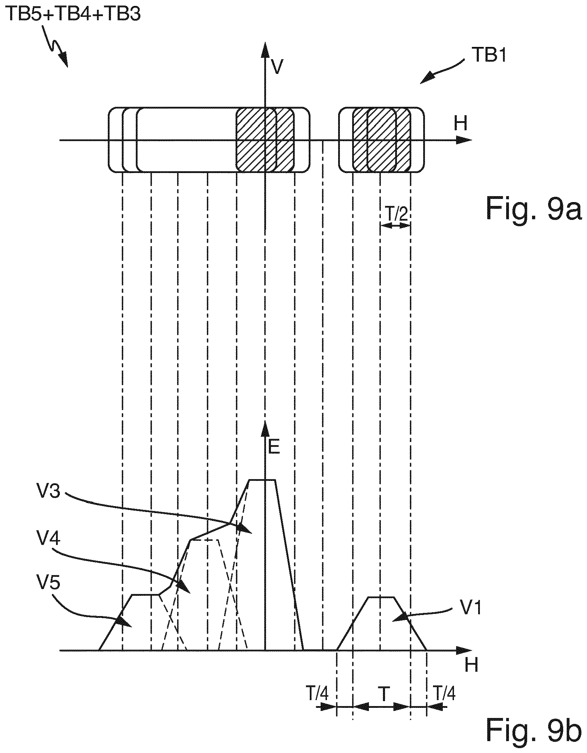

Figur 9 zeigt eine sekundäre Lichtverteilung für ein Lichtmodul eines erfindungsgemäßen Scheinwerfers, bei dem das optische Element, das die primäre Lichtverteilung in die sekundäre Lichtverteilung überführt, eine Streuung, respektive eine Verbreiterung, erster Teilbereiche der sekundären Lichtverteilung um jeweils T/4 zu jeder Seite bewirkt. Die resultierenden Beleuchtungsstärkeverteilungen sind dann trapezförmig. Bei ihrer Überlagerung ergeben sich wieder ausgeprägte Stufen im Summenprofil

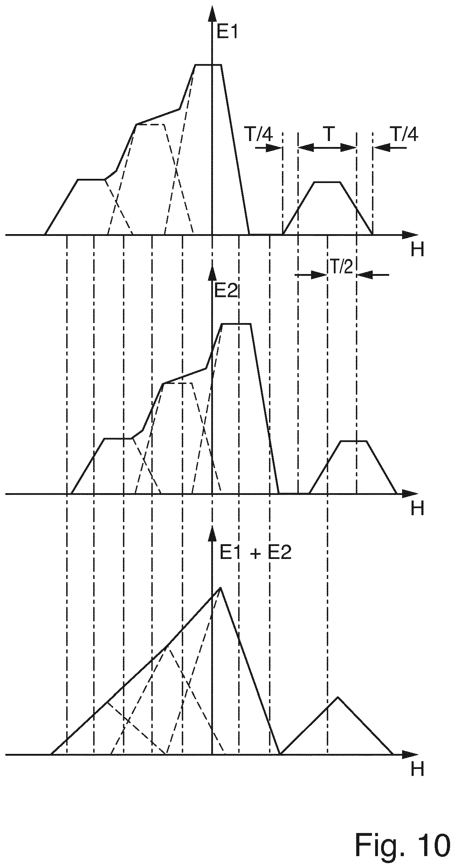

Figur 10 zeigt, wie sich solche Stufen durch eine Verwendung von mehreren Lichtmodulen eliminieren lassen. Figur 10a zeigt das hier als E1 bezeichnete Beleuchtungsstärkeprofil der Figur 9b. Figur 10b zeigt ein Beleuchtungsstärkeprofil E2, das ganz ähnlich wie das Beleuchtungsstärkeprofil E1 erzeugt wird. Der einzige Unterschied zwischen den Beleuchtungsprofilen E1 und E2 besteht darin, dass sie insgesamt um T/2 gegeneinander versetzt längs der Horizontalen H liegen. Durch Überlagerung der Beleuchtungsstärkeprofile E1 und E2 gemäß Figur 10c führt dieser Versatz nun dazu, dass sich immer ein linearer Abschnitt des einen Profils und ein konstanter Abschnitt des jeweils anderen Profils überlagern, so dass sich in der Summe dreiecksförmige Summenprofile gemäß Figur 10c ergeben, die den Summenprofilen der Figur 8b ganz ähnlich sind und welche die gleichen Vorteile aufweisen. Mit anderen Worten: Die störenden Stufen in den Beleuchtungsstärkeprofilen der Einzelmodule verschwinden bei der Überlagerung weitgehend.

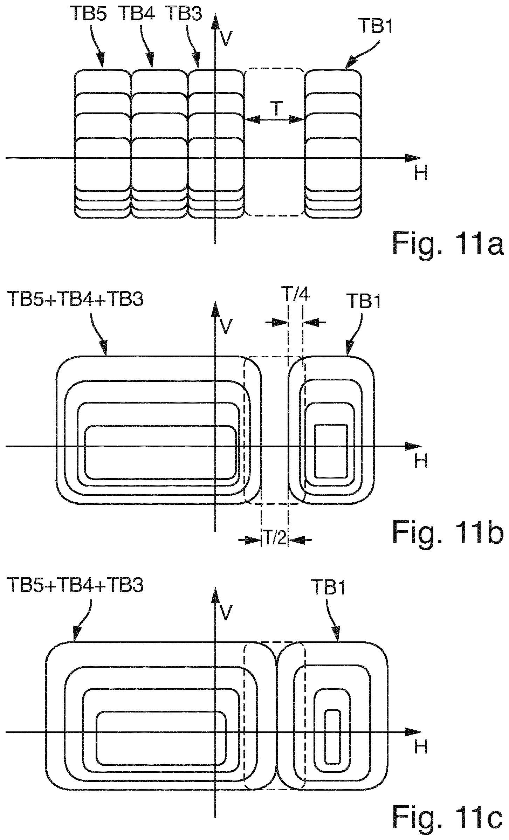

Figur 11 zeigt noch einmal die sich insgesamt ergebenden sekundären Lichtverteilungen beim Stand der Technik und bei zwei Ausführungsbeispielen der vorliegenden Erfindung im Vergleich. Die geschlossenen Linien entsprechen hier jeweils Isolux-Linien, also Linien mit gleicher Beleuchtungsstärke. Für die ganze Figur 11 gilt, dass jeweils ein Lichtmodul fünf Einzellichtverteilungen erzeugt, wobei die zweite Einzellichtverteilung jeweils stark gedimmt ist. Figur 11a zeigt das bekannte Streifenfernlicht, das durch scharfe Abbildung einzelner Einzellichtverteilungen erzeugt wird. Figur 11b zeigt die sekundäre Lichtverteilung bei der Verwendung eines erfindungsgemäßen Scheinwerfers mit zwei Fernlicht-Lichtmodulen und einer horizontalen Streuung von T/4, und Figur 11c zeigt die sekundäre Lichtverteilung eines einzelnen Lichtmoduls mit einer horizontalen Streuung von T/2.

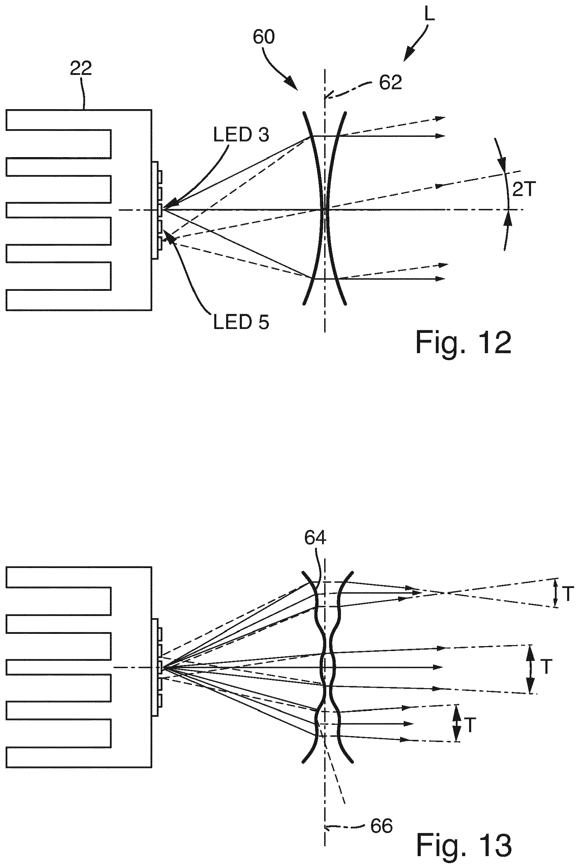

Figur 12 zeigt ein zum Gegenstand der Figur 6 analoges bekanntes Lichtmodul, mit dem die in Figur 5 dargestellten Muster erzeugt werden, zusammen mit Strahlengängen für die Abbildung der Einzellichtverteilungen, die mit der dritten Leuchtdiode LED 3 und der der fünften Leuchtdiode LED 5 erzeugt werden. Der Gegenstand der Figur 12 unterscheidet sich vom Gegenstand der Figur 6, dadurch, dass die abbildende Projektionslinse des Gegenstands der Figur 6 beim Gegenstand der Figur 12 durch einen abbildenden Hohlspiegel 60 ersetzt worden ist. Die Strahlengänge der Figuren 6 und 12 sind äquivalent, wobei der Strahlengang in der Figur 12 aus Gründen der Übersichtlichkeit aufgefaltet dargestellt ist. Um daraus einen realen Strahlengang zu erhalten, müsste der rechts von der gestrichelten Linie 62 liegende Teil der Figur 12 um die gestrichelte Linie herum auf den links von dieser Linie liegenden Teil gefaltet werden.

Dies gilt analog für den Gegenstand der Figur 13 und der Figur 7. Figur 13 zeigt ein zum Gegenstand der Figur 7 analoges Ausführungsbeispiel eines Merkmale der Erfindung aufweisenden Lichtmoduls, zusammen mit Strahlengängen, die zu den in der Figur 7 dargestellten Strahlengängen äquivalent sind. Der Gegenstand der Figur 13 unterscheidet sich vom Gegenstand der Figur 7 dadurch, dass die horizontal streuende Projektionslinse des Gegenstands der Figur 7 beim Gegenstand der Figur 13 durch einen horizontal streuenden Hohlspiegel 64 ersetzt worden ist. Die Strahlengänge der Figuren 7 und 13 sind äquivalent, wobei der Strahlengang in der Figur 13 wie auch der Strahlengang in der Figur 12 aus Gründen der Übersichtlichkeit aufgefaltet dargestellt ist. Um daraus einen realen Strahlengang zu erhalten, müsste der rechts von der gestrichelten Linie liegende Teil der Figur 13 um die gestrichelte Linie herum auf den links von dieser Linie 66 liegenden Teil gefaltet werden.

Nach dieser auch als Übersicht zu verstehenden Beschreibung der Figuren werden im Folgenden weitere Aspekte, Eigenschaften und Vorteile von Ausgestaltungen der Erfindung unter erneuter Bezugnahme auf die Figuren offenbart. Die Erfindung verkörpert sich in einem Lichtmodul, das ein Lichtquellenfeld und eine streuende Optik aufweist. Das Lichtquellenfeld kann aus mehreren unmittelbar nebeneinander angeordneten LED-Chips gebildet werden, wie es in der Figur 3 dargestellt ist. Alternativ kann das Lichtquellenfeld als Ersatzlichtquellenfeld dargestellt werden, wie es in Figur 4 dargestellt ist. Dabei werden mehrere Ersatzlichtquellen unmittelbar nebeneinander zu einem Feld angeordnet, wobei jede Ersatzlichtquelle aus einer LED und einer Primäroptik besteht.

Als Basis für die streuende Optik können verschiedene abbildende Optiken verwendet werden, beispielsweise ein Parabelreflektor, insbesondere ein facettiertes Rotationsparaboloid, dessen Facetten gleiche Schnittweiten aufweisen und damit gleiche Bildgrößen erzeugen. Alternativ kann die Brechkraft des Reflektors zusätzlich auf eine Sammellinse oder Zerstreuungslinse verteilt werden, indem das Rotationsparaboloid zu einem Hyperboloid (Sammellinse) bzw. zu einem Ellipsoid abgewandelt wird. Ferner können auch Sammellinsen verwendet werden, insbesondere solche, die der Sinusbedingung genügen. Als weitere Alternative kommen auch farbkorrigierte Baugruppen aus Sammellinsen mit kleiner Farbdispersion und Zerstreuungslinsen mit großer Farbdispersion, also sogenannte Achromate, in Frage.

Wenn diese Projektionsoptiken als abbildende Optiken verwirklicht sind, bilden sie einen Objektpunkt als Bildpunkt oder zumindest als Bildlinie ab, wobei die Bildlinie hier in Richtung der Hell-Dunkel-Grenzen der Lichtverteilungen orientiert ist. Die abbildende Eigenschaft gilt dabei also zumindest in Schnitten senkrecht zu den Hell-Dunkel-Grenzen der erzeugten Lichtverteilungen. Für Lichtverteilungen, die durch vertikale Hell-Dunkel-Grenzen voneinander abgegrenzt sind, bezieht sich die abbildende Eigenschaft also auf die Horizontalschnitte des optischen Systems: Die vertikalen Trennlinien zwischen den Lichtquellen bzw. zwischen den Ersatzlichtquellen werden wiederum als scharfe vertikale Trennlinien zwischen den Lichtverteilungen abgebildet.

Finden sich Abstände und Lücken zwischen den Lichtquellen bzw. Ersatzlichtquellen, so werden auch diese scharf wiedergegeben, so dass man diese Lücken in der sekundären Lichtverteilung wiederfindet. Weist die Lichtquelle oder Ersatzlichtquelle einen konstanten Beleuchtungsstärkeverlauf über die Lichtquellenbreite / Chipbreite auf, so gilt dies bei abbildenden Optiken näherungsweise auch für das Bild, d.h. für die daraus erzeugten Lichtverteilungen.

Bei der Erfindung wird nun an Stelle einer solchen abbildenden Optik eine streuende Optik mit folgenden Eigenschaften verwendet:
Alle (infinitesimal kleinen) Zonen der Optik erzeugen weitgehend gleich große und gleich orientierte Lichtquellenbilder. Die aus verschiedenen Zonen der Optik erzeugten Lichtquellenbilder sind insbesondere horizontal verschoben. Durch die horizontale Streuung wird der von einem Objektpunkt ausgehende Strahlengang an keinem Ort des Strahlenganges wieder zu einem Bildpunkt vereinigt. Die Lichtquellenbilder werden durch die verschiedenen Zonen der Optik in der Weise horizontal verschoben, dass an den Hell-Dunkel-Grenzen der erzeugten Lichtverteilungen ein linearer Beleuchtungsstärkeabfall entsteht. Die Verschiebung der Lichtquellenbilder bewirkt eine horizontale Überlappung benachbarter Lichtverteilungen. Wird die Lichtfunktion aus einem einzelnen Lichtmodul gebildet, beträgt der Überlappungsbereich idealerweise 100%: Jede Lichtverteilung verläuft dann von der Mitte einer auf einer Seite benachbarten Lichtverteilung einer Lichtverteilung bis zur Mitte der auf der gegenüberliegenden anderen Seite der Lichtverteilung benachbarten Lichtverteilung.

Wenn T die Winkelbreite eines Lichtquellenbildes, oder genauer, der Abstand von der Mitte des Bildes einer Einzellichtverteilung zur Mitte der benachbarten Einzellichtverteilung ist (um auch etwaige Lücken zwischen den Lichtquellen oder Ersatzlichtquellen zu berücksichtigen), so werden die Lichtquellenbilder idealerweise um ± T/2 horizontal verschoben. Die Verschiebung erfolgt also senkrecht zu den Hell-Dunkel-Grenzen der Lichtverteilungen. Da die Verschiebung so geschehen soll, dass sich ein linearer Beleuchtungsstärkeabfall zu beiden Seiten der Lichtverteilung ergibt, erhält man in diesem Fall einen symmetrischen dreieckförmigen Beleuchtungsstärkeverlauf im Horizontalschnitt der Lichtverteilung: Ausgehend vom Beleuchtungsstärkemaximum, das in der Mitte der Lichtverteilung den Scheitelpunkt bildet, fällt die Beleuchtungsstärke beiderseits bis zur Mitte der benachbarten Lichtverteilungen linear auf null ab.

Wird die Gesamtlichtverteilung durch Überlagerung einer Anzahl von n sekundären Lichtverteilungen gebildet, von denen jede durch ein Lichtmodul erzeugt wird, werden die jeweiligen Lichtverteilungen idealerweise um T/n gegeneinander horizontal verschoben (von ganz links bis ganz rechts), wobei T der Abstand der Einzellichtverteilungen ist, der von Mitte zu Mitte gemessen wird. Bezieht man die Verschiebungen auf die Mitte der Lichtverteilung, erhält man eine horizontale Verschiebung der Chipbilder von ± T/2n um die Mitte der Lichtverteilung. Der Uberlappungsbereich beträgt allgemein formuliert also 1/n für n überlagerte Lichtverteilungen, die um T/n gegeneinander versetzt angeordnet sind, d.h. ihrerseits wiederum um T/n überlappen.

Die bei der Erfindung verwendete Projektionsoptik bildet einen objektseitigen Punkt damit als Linie ab, wobei die Bildlinie senkrecht zu den gewünschten Hell-Dunkel-Grenzen orientiert ist und die Breite mindestens T/2n beträgt. Es handelt sich also um eine horizontal streuende Optik. Grundsätzlich kann die Streuung auch stärker ausgeführt werden, worunter jedoch die Schärfe der Hell-Dunkel-Grenzen leidet.

Die Streuung wird bevorzugt erzeugt, indem die abbildende Optik mit einer zylindrischen Abweichung von ihrer abbildenden Grundform moduliert wird. Die Zylinderachse liegt dabei bevorzugt parallel zur Hell-Dunkel-Grenze der Lichtverteilung und ist damit insbesondere vertikal orientiert. Unter einer Modulation wird dabei eine Formänderung einer optischen Oberfläche des optischen Elements verstanden. Bei der Modulation mit einer zylindrischen Abweichung hat die optische Oberfläche daher zumindest in Teilbereichen der Oberfläche eine zylindrische Form. Diese zylindrische oder allgemeiner, streuende Form wird bevorzugt auf der im Strahlengang letzten optischen Fläche der Optik aufgebracht, sei es eine Spiegelfläche eines Reflektors oder eine Lichtaustrittsfläche einer Linse.

Bevorzugt ist auch, die Optik zusätzlich längs der Hell-Dunkel-Grenzen streuend auszuführen, um so einen gewünschten vertikalen Beleuchtungsstärkeverlauf zu erzielen. Mit dieser zusätzlichen Ausgestaltung bildet die Optik einen Objektpunkt nicht als Linie, sondern als Rechteck ab.

Die längs der Hell-Dunkel-Grenze erfolgende Streuung wird wahlweise durch eine Modulation der Form der optischen Oberfläche mit einer zweiten zylindrischen Abweichung in die optische Fläc he eingearbeitet. Die Zylinderachse der zweiten zylindrischen Abweichung liegt also bevorzugt senkrecht zu den vertikalen Hell-Dunkel-Grenzen der sekundären Lichtverteilung. Wenn die Optik mehrere Flächen aufweist, wie es bei einer Linse oder einer Kombination aus Linsen oder Linsen und Reflektoren der Fall ist, kann die längs und quer zu den Hell-Dunkel-Grenzen erfolgende Streuung auch auf verschiedene Flächen verteilt werden. Die quer zu den Hell-Dunkel-Grenzen erfolgende Streuung wird bevorzugt durch Modulation der letzten optischen Fläche im Strahlengang erzeugt.

Die beschriebene Streuoptik kann auch als gesonderte Streuscheibe in den Strahlengang des Lichtmoduls eingebracht werden.

Ein weiterer Vorzug einer streuenden Optik der beschriebenen Art besteht darin, dass Lücken bzw. Inhomogenitäten im horizontalen Verlauf der primären Lichtverteilung bei der Überführung in die sekundäre Lichtverteilung so breit auseinandergezogen werden können, dass sie vollständig verschwinden. Es können daher auch Lichtquellen verwendet werden, die in der NebeneinanderAnordnung einen Abstand voneinander aufweisen. Üblicherweise werden zum Beispiel LED-Chips, die eine Kantenlänge von einem mm aufweisen, in den üblichen LED-Feldern in einem mittleren Abstand von 0,1mm angeordnet.

Jedes Lichtmodul erzeugt mehrere, in mindestens einer Linie nebeneinanderliegende Lichtverteilungen, wobei mindestens zwei Lichtverteilungen gleiche Breite aufweisen. Jede Zone der Optik bildet das Lichtquellenfeld oder Ersatzlichtquellenfeld mit weitgehend gleichem Abbildungsmaßstab nach unendlich ab. In den Horizontalschnitten durch das Lichtquellenfeld soll die Leuchtdichte innerhalb einer Lichtquelle näherungsweise konstant sein, so dass sich über einer Lichtquellenbreite ein rechteckförmiges Leuchtdichteprofil ergibt. Die einzelnen Lichtquellen sollen als weitgehend lückenlos aneinandergereiht angenommen werden. Auf dieses Lichtquellenfeld fokussiert nun eine nachgeschaltete Optik, die aus jeder Zone ein weitgehend gleich großes und gleich orientiertes Bild des Lichtquellenfeldes erzeugt. Diese Optik ist dazu eingerichtet, eine Streuung, insbesondere eine horizontale Streuung, zu bewirken, durch welche die Bilder aus den einzelnen Optikzonen horizontal gegeneinander verschoben werden. Eine Zone ist dabei ein beliebig kleiner Teil der Optik.

Die Verschiebung erfolgt so, dass beiderseits jedes Teilbereiches der sekundären Lichtverteilung ein Unschärferand entsteht, in dem die Beleuchtungsstärke linear auf null abfällt. Nimmt man die Teilbereiche als unmittelbar und lückenlos aneinander angrenzend an, so entsteht durch diese Unschärfe ein Überlappungsbereich zwischen benachbarten Teilbereichen. Die Breite des Uberlappungsbereichs beträgt mindestens T/n, wobei T wie beschrieben der Mittenabstand benachbarter Lichtverteilungen im Winkelraum ist und wobei n die Anzahl der Lichtmodule ist, deren Lichtverteilungen überlagert werden sollen und die im Winkelraum ihrerseits um T/n gegeneinander horizontal verschoben sind.

Auf diese Weise wird sichergestellt, dass sich die Überlappungsbereiche in der Gesamtlichtverteilung, die sich als Summenlichtverteilung aus den Lichtverteilungen der einzelnen Lichtmodule zusammensetzt, nahtlos aneinanderreihen oder sogar überlappen.

Durch die Uberlappung der Lichtverteilungen und insbesondere durch den linearen Beleuchtungsstärkeabfall an den Rändern der Lichtverteilungen lassen sich benachbarte Lichtverteilungen dimmen, ohne dass zwischen den Lichtverteilungen hohe Beleuchtungsstärkegradienten entstehen, die vom Fahrer als Inhomogenitäten ("Gartenzaun", schwarze Streifen) wahrgenommen werden.

Die genannten Mindeststreubreiten der Optik gewährleisten einen optimalen Kompromiss aus den konträren Forderungen an eine Homogenität der Lichtverteilung und eine Schärfe der Hell-Dunkel-Grenze an der Grenze zum Dunkelfeld.

Die Streuung wird bevorzugt durch eine wellenförmige Deformation der optischen Fläche erzielt. Die wellenförmige Deformation sollte mindestens eine konkave und eine konvexe Halbwelle umfassen. Bevorzugt wird werden mehrere und gleich viele konkave und konvexe Halbwellen verwendet, um die Streuung weitgehend unabhängig von der Fokussierung der Optik zu halten. Eine solche wellenförmige Deformation oder auch Modulation wird bevorzugt durch eine Zylindergeometrie erreicht, die vorzugsweise auf die letzte Fläche der bevorzugt astigmatischen Optik aufgebracht ist wird. Die Zylinderachse(n) stehen dabei senkrecht und damit parallel zu den Hell-Dunkel-Grenzen der Lichtverteilungen.

## Patentansprüche

1. Kraftfahrzeugscheinwerfer (10) mit wenigstens einem Lichtmodul, das dazu eingerichtet ist, eine primäre Lichtverteilung im Inneren des Scheinwerfers zu erzeugen und durch wenigstens ein optisches Element in eine außerhalb des Scheinwerfers liegende sekundäre Fernlichtverteilung (24) zu überführen, wobei die primäre Lichtverteilung aus mehreren Einzellichtverteilungen besteht, von denen jede von einer individuellen Lichtquelle erzeugt wird, und wobei das optische Element eine Grundform (49) besitzt, durch die es dazu eingerichtet ist, jeweils eine Einzellichtverteilung der primären Lichtverteilung in einen ersten Teilbereich (TB1) der sekundären Lichtverteilung zu überführen, **wobei** das optische Element wenigstens eine optische Fläche aufweist, welche die Grundform so moduliert, dass das optische Element eine Einzellichtverteilung der primären Lichtverteilung in eine Vielzahl von zweiten Teilbereichen (TB1_2) der sekundären Lichtverteilung überführt, die gleich groß und mit gleicher Orientierung gegeneinander verschoben in der sekundären Lichtverteilung überlappend angeordnet sind und in ihrer Überlappung einen ersten Teilbereich (TB1) bilden, **dadurch gekennzeichnet, dass** das optische Element eine Grundform hat, die dem optischen Element abbildende Eigenschaften verleiht und dass der Grundform eine erste wellenförmige Deformation der optischen Fläche überlagert ist, die mindestens eine konkave und eine konvexe Halbwelle umfasst.

2. Scheinwerfer (10) nach Anspruch 1, **dadurch gekennzeichnet, dass** das optische Element dazu eingerichtet ist, einander benachbarte Einzellichtverteilungen der primären Lichtverteilung in einander überlappende erste Teilbereiche der sekundären Lichtverteilung zu überführen.

3. Scheinwerfer (10) nach Anspruch 1, **dadurch gekennzeichnet, dass** die Einzellichtverteilungen der primären Lichtverteilung unmittelbar benachbart aneinander gereiht angeordnet sind.

4. Scheinwerfer (10) nach einem der vorhergehenden Ansprüche, **dadurch gekennzeichnet, dass** jedes Lichtmodul mehrere, in einer Linie nebeneinander liegende Lichtverteilungen erzeugt, wobei mindestens zwei nebeneinander liegende Lichtverteilungen gleiche Breite aufweisen.

5. Scheinwerfer (10) nach einem der vorhergehenden Ansprüche, **dadurch gekennzeichnet, dass** die zweiten Teilbereiche so verschoben sind, dass beiderseits eines Zentrums einer Überlagerung der zweiten Teilbereiche ein Unschärferand entsteht, in dem die Helligkeit linear abfällt.

6. Scheinwerfer (10) nach Anspruch 1, **dadurch gekennzeichnet, dass** die wellenförmige Deformation eine zum Teil zylindrische Form besitzt, deren Zylinderachse parallel zur Hell-Dunkel-Grenze der Lichtverteilung ausgerichtet ist.

7. Scheinwerfer (10) nach einem der Ansprüche 1 oder 6, **dadurch gekennzeichnet, dass** die wellenförmige Deformation ein Bestandteil der letzten optischen Fläche des optischen Elements in einem die primäre Lichtverteilung in die sekundäre Lichtverteilung überführenden Strahlengangs ist.

8. Scheinwerfer (10) nach einem der vorhergehenden Ansprüche, **dadurch gekennzeichnet, dass** der Grundform eine zweite wellenförmige Deformation überlagert ist, die eine zum Teil zylindrische Form besitzt, deren Zylinderachse quer zur Hell-Dunkel-Grenze der Lichtverteilung ausgerichtet ist.

9. Scheinwerfer (10) nach Anspruch 8, **dadurch gekennzeichnet, dass** das optische Element mehrere jeweils das gleiche Licht formende optische Flächen aufweist und dass die parallel zur Hell-Dunkel-Grenze der Lichtverteilung liegende Abweichung und die quer zur Hell-Dunkel-Grenze der Lichtverteilung liegende Abweichung von der Grundform auf verschiedenen der optischen Flächen verwirklicht ist.

10. Scheinwerfer (10) nach einem der Ansprüche 1 bis 9, **dadurch gekennzeichnet, dass** das wenigstens eine optische Element die Grundform eines Parabelreflektors besitzt und insbesondere ein facettiertes Rotationsparaboloid ist, oder einen Hyperboloid-Reflektor und eine Sammellinse, oder einen Ellipsoidreflektor und eine Zerstreuungslinse, oder nur Sammellinse aufweist, oder eine farbkorrigierte Baugruppe aus wenigstens einer Sammellinse mit kleiner Farbdispersion und einer Zerstreuungslinse mit großer Farbdispersion aufweist.

11. Scheinwerfer (10) nach einem der vorhergehenden Ansprüche, **dadurch gekennzeichnet, dass** Lichtquellen benachbarter Lichtquellen dazu eingerichtet sind, in gesteuerter Weise mit gleicher oder von Lichtquelle zu Lichtquelle oder von Gruppe zu Gruppe verschiedener Helligkeit betrieben zu werden.

12. Scheinwerfer (10) nach einem der vorhergehenden Ansprüche, **dadurch gekennzeichnet, dass** der Scheinwerfer genau ein Lichtmodul mit den in einem der vorhergehende Ansprüchen genannten Merkmalen aufweist und dass sich jeder erste Teilbereich von der Mitte eines unmittelbar benachbarten ersten Teilbereichs bis zur Mitte des auf der gegenüberliegenden unmittelbar benachbarten ersten Teilbereichs erstreckt.

13. Scheinwerfer (10) nach einem der Ansprüche 1 bis 10, **dadurch gekennzeichnet, dass** der Scheinwerfer n Module (L1, L2, ....) mit den in einem der vorhergehenden Ansprüchen genannten Merkmalen aufweist, **dadurch gekennzeichnet, dass** die Module im Scheinwerfer so angeordnet sind, dass sich ihre sekundären Lichtverteilungen zu einer Gesamtlichtverteilung überlagern, wobei jeweils zwei Lichtmodule so angeordnet sind, dass ihre sekundären Lichtverteilungen um T/n gegeneinander verschoben liegen, wobei T der Abstand von zwei benachbarten zweiten Teilbereichen in jeder der beiden sekundären Lichtverteilungen ist.

## Claims

1. A motor vehicle headlamp (10) having at least one light module, which light module is arranged for generating a primary light distribution in the interior of the headlamp and converting it through at least one optical element into a secondary high-beam light distribution (24) located outside the headlamp, wherein the primary light distribution consists of a plurality of individual light distributions, each of which is generated by an individual light source, and wherein the optical element has a basic shape (49), by means of which it is arranged for converting an individual light distribution of the primary light distribution into a first portion (TB1) of the secondary light distribution, **wherein** the optical element has at least one optical surface that moderates the basic shape such that the optical element converts an individual light distribution of the primary light distribution into a plurality of second portions (TB1_2) of the secondary light distribution are of equal size and are located with the same orientation offset from one another in overlapping fashion in the secondary light distribution and in their overlapped arrangement form a first portion (TB1), **characterized in that** the optical element has a basic shape that lends the optical element projection properties, and that superimposed on the basic shape is a first wavelike deformation of the optical surface that includes at least one concave and one convex half-wave.

2. The headlamp (10) of claim 1, **characterized in that** the optical element is arranged for converting adjacent individual light distributions of the primary light distribution into overlapping first portions of the secondary light distribution.

3. The headlamp (10) of claim 1, **characterized in that** the individual light distributions of the primary light distribution are aligned with one another and are directly adjacent one another.

4. The headlamp (10) of one of the foregoing claims, **characterized in that** each light module generates a plurality of light distributions, aligned with and next to one another, and at least two light distributions next to one another have the same width.

5. The headlamp (10) of one of the foregoing claims, **characterized in that** the second portions are offset such that on both sides of a center of a superposition of the second portions, a blurring edge is created, in which the brightness drops off linearly.

6. The headlamp (10) of claim 1, **characterized in that** the wavelike deformation has a partially cylindrical shape, the cylinder axis of which is oriented parallel to the light-dark boundary.

7. The headlamp (10) of one of claims 1 or 6, **characterized in that** the wavelike deformation is a component of the final optical surface of the optical element in a beam path that converts the primary light distribution into the secondary light distribution.

8. The headlamp (10) of one of the foregoing claims, **characterized in that** superimposed on the basic shape is a second wavelike deformation, which has a partially cylindrical shape, the cylinder axis of which is oriented transversely to the light-dark boundary of the light distribution.

9. The headlamp (10) of claim 8, **characterized in that** the optical element has a plurality of optical surfaces, each shaping the same light; and that the deviation from the basic shape located parallel to the light-dark boundary of the light distribution and the deviation from the basic shape located transversely to the light-dark boundary of the light distribution is realized on various ones of the optical faces.

10. The headlamp (10) of one of claims 1 through 9, **characterized in that** the at least one optical element has the basic shape of a paraboloid reflector and in particular is a faceted paraboloid of revolution, or a hyperboloid reflector and a collimating lens, or an ellipsoid reflector and a scattering lens, or only a collimating lens, or has a color-corrected structural group consisting of at least one collimating lens with low color dispersion and a scattering lens with high color dispersion.

11. The headlamp (10) of one of the foregoing claims, **characterized in that** light sources of adjacent light sources are arranged for being operated in a controlled way with the same brightness, or with brightness varying from light source to light source or from group to group.

12. The headlamp (10) of one of the foregoing claims, **characterized in that** the headlamp has precisely one light module having the features recited in one of the foregoing claims; and that each first portion extends from the middle of a directly adjacent first portion to the middle of the directly adjacent first portion on the opposite side.

13. The headlamp (10) of one of claims 1 through 10, **characterized in that** the headlamp has small n modules (L1, L2, ...) having the features recited in one of the foregoing claims, **characterized in that** the modules are located in headlamps in such a way that their secondary light distributions are superimposed to produce a total light distribution, and each two light modules are located such that their secondary light distributions are offset from one another by T/n, where T is the spacing of two adjacent second portions in each of the two secondary light distributions.

## Revendications

1. Feu de véhicule automobile doté d'un phare (10) avec au moins un module lumineux qui est adapté pour engendrer une répartition lumineuse primaire à l'intérieur du phare et pour la transformer à l'aide d'au moins un élément optique en une répartition lumineuse de feu de route (24) secondaire située à l'extérieur du phare, la répartition lumineuse primaire étant constituée de plusieurs répartitions lumineuses individuelles dont chacune est produite par une source lumineuse individuelle, et l'élément optique ayant une forme de base (49) par laquelle elle est adaptée pour transformer chacune des répartitions lumineuses individuelles de la répartition lumineuse primaire en une première zone partielle (TB1) de la répartition lumineuse secondaire, l'élément optique comprenant au moins une surface optique modulant la forme de base de façon telle que l'élément optique transforme une répartition lumineuse individuelle de la répartition lumineuse primaire en une pluralité de deuxièmes zones partielles (TB1_2) de la répartition lumineuse secondaire qui ont la même taille et sont disposées de façon décalée les unes par rapport aux autres, avec la même orientation, en se chevauchant dans la répartition lumineuse secondaire et qui forment en leur chevauchement une première zone partielle (TB1), **caractérisé en ce que** l'élément optique a une forme de base qui confère à l'élément optique des caractéristiques de formation d'image et **en ce qu'**il est superposé à la forme de base, une première déformation ondulée de la surface optique qui comprend au moins une demi-onde concave et une demi-onde convexe.

2. Phare (10) selon la revendication 1, **caractérisé en ce que** l'élément optique est adapté pour transformer des répartitions lumineuses individuelles adjacentes l'une à l'autre de la répartition lumineuse primaire en des zones partielles se chevauchant de la répartition lumineuse secondaire.

3. Phare (10) selon la revendication 1, **caractérisé en ce que** les répartitions lumineuses individuelles de la répartition lumineuse primaire sont disposées de façon directement avoisinante les unes à la suite des autres.

4. Phare (10) selon l'une des revendications précédentes, **caractérisé en ce que** chaque module lumineux produit plusieurs répartitions lumineuses disposées les unes à côté des autres sur une ligne, au moins deux répartitions lumineuses situées l'une à côté de l'autre ayant la même largeur.

5. Phare (10) selon l'une des revendications précédentes, **caractérisé en ce que** les deuxièmes zones partielles sont décalées de façon telle qu'il soit produit, de part et d'autre d'un centre d'un chevauchement des deuxièmes zones partielles, un bord flou dans lequel la luminosité décroît de manière linéaire.

6. Phare (10) selon la revendication 1, **caractérisé en ce que** la déformation ondulée présente une forme partiellement cylindrique dont l'axe de cylindre est orienté parallèlement à la coupure de la répartition lumineuse.

7. Phare (10) selon l'une des revendications 1 ou 6, **caractérisé en ce que** la déformation ondulée fait partie de la dernière surface optique de l'élément optique d'un trajet lumineux transformant la répartition lumineuse primaire en la répartition lumineuse secondaire.

8. Phare (10) selon l'une des revendications précédentes, **caractérisé en ce qu'**il est superposé à la forme de base, une deuxième déformation ondulée qui présente une forme partiellement cylindrique dont l'axe de cylindre est orienté transversalement à la coupure de la répartition lumineuse.

9. Phare (10) selon la revendication 8, **caractérisé en ce que** l'élément optique comprend plusieurs surfaces optiques formant chacune la même lumière et **en ce que** la différence par rapport à la forme de base se présentant respectivement parallèlement à la coupure de la répartition lumineuse et transversalement à la coupure de la répartition lumineuse, est réalisée sur des surfaces différentes parmi les surfaces optiques.

10. Phare (10) selon l'une des revendications 1 à 9, **caractérisé en ce que** ledit au moins un élément optique a la forme de base d'un réflecteur parabolique et est notamment un paraboloïde de rotation facetté, ou comprend un réflecteur hyperboloïdal et une lentille convergente ou un réflecteur ellipsoïdal et une lentille divergente ou uniquement une lentille convergente ou une unité de composants corrigé en couleur et constituée d'au moins une lentille convergente ayant une faible dispersion des couleurs ou une lentille divergente ayant une forte dispersion des couleurs.

11. Phare (10) selon l'une des revendications précédentes, **caractérisé en ce que** des sources lumineuses parmi des sources lumineuses avoisinantes sont adaptées pour fonctionner de manière commandée à la même luminosité ou à des luminosités différentes d'une source lumineuse à l'autre ou d'un groupe à l'autre.

12. Phare (10) selon l'une des revendications précédentes, **caractérisé en ce que** le phare comprend exactement un module lumineux présentant les caractéristiques énoncées dans l'une des revendications précédentes et **en ce que** chaque première zone partielle s'étend du centre d'une première zone partielle directement avoisinante jusqu'au centre d'une première zone partielle directement avoisinante située de l'autre côté.

13. Phare (10) selon l'une des revendications 1 à 10, **caractérisé en ce que** le phare comprend n modules (L1, L2, ...) présentant les caractéristiques énoncées dans l'une des revendications précédentes et **caractérisé en ce que** les modules sont disposés dans le phare de façon telle que leurs répartitions lumineuses secondaires se chevauchent pour donner une répartition lumineuse totale, deux modules respectifs étant disposés de façon que leur répartitions lumineuses secondaires soient décalées l'une de l'autre de T/n, où T est la distance de deux deuxièmes zones partielles avoisinantes dans chacune des deux répartitions lumineuses secondaires.
